# EUROPEAN PATENT APPLICATION

(11) **EP 1 338 980 A1**
(43) Date of publication of application: **27.08.2003**
(21) Application number: 02003540.8
(22) Date of filing: 15.02.2002
(51) Int. Cl.: G06F 17/30

(54) **Method and computer system for rendering of browser-compliant documents**

(71) Applicant: SAP Aktiengesellschaft, 69190 Walldorf (DE)
(72) Inventor: Bächle, Werner, 69115 Heidelberg (DE); Rössler, Andreas, 75056 Sulzfeld (DE); Wedel, Malte, 80333 München (DE); Dencker, Thorsten, 63063 Ludwigshafen (DE)

(57) **Abstract**

A computer-implemented method and system for rendering a browser-compliant document (200): a server computer (901) generates the browser-compliant document (200) that comprises at least one component (210). The server computer (901) sends (420) the browser-compliant document (200) to a client computer (900). The client computer (900) provides (430) at least one predefined rendering-function (310). The client computer (900) receives (440) an update request (989) for the component (210) and regenerates (450) the component (210) by using the rendering-function (310).

## Description

### Field of the Invention

The present invention generally relates to electronic data processing, and more particularly, relates to method, computer program product and system for client-server communication.

### Background of the Invention

Creating (rendering) browser-compliant documents (e.g. HTML or WML documents) on a server, is known in the art. For example, a server merges data and layout information to generate a browser-compliant document (BCD). The server sends the BCD to a client, where it is visualized via a conventional browser, such as the Microsoft Internet Explorer. When refreshing the BCD, the whole process is repeated. An advantage is that no client-side processing is required and, therefore, a browser-compliant document is completely visualized once it is loaded by the browser. However, a high bandwidth of the computer network that connects the client to the server is required because the full BCD content (layout information and data) has to be transmitted from the server to the client via the network. Further, each time, when the client recognizes a need to change the BCD content, a server round-trip is triggered, where the client sends a request to the server to send an updated BCD. This leads to undesired effects (e.g. waiting time, screen flicker) for a computer user.

To reduce bandwidth requirements, other prior art solutions create (render) a BCD at the client by using client-side functions (e.g. JavaScript functions). In these prior art solutions, typically, data is separated from layout information. This allows to implement a delta mechanism where an individual component of the BCD is re-rendered at the client. The component includes data that has changed. The disadvantage of this method is that rendering a complex component of a BCD (e.g. a table component that contains subcomponents, such as nested tables and input fields) is very time consuming at the client and leads to undesired effects (e.g. waiting time for displaying a re-rendered component) for the computer user.

### Summary of the Invention

Hence, the present invention provides computer-implemented method, computer program product and computer system to provide a solution to the technical problem of undesired effects, such as waiting time or screen flicker, for the user when rendering a browser-compliant document.

As expressed in claim 1, the technical problem is solved by a computer implemented method for rendering a browser-compliant document (BCD). The method includes the following features:
a) generating on a server computer the browser-compliant document that comprises at least one component;
b) sending the browser-compliant document from the server computer to a client computer;
c) providing on the client computer at least one predefined rendering-function;
d) receiving at the client computer an update request for the component; and
e) regenerating on the client computer the component using the rendering-function.

It is an advantage of the present invention that the BCD is initially generated (rendered) on the server and then sent to the client. A server computer usually performs rendering much faster than a client computer. Therefore, the initial waiting time for a user is reduced when compared to a solution where the initial BCD is rendered at the client by using corresponding client-side rendering functions. This becomes significant, when the BCD includes a complex component, such as a table with a nested table.

It is a further advantage that after the initial rendering of the BCD only individual components of the BCD are regenerated (re-rendered) at the client instead of regenerating the complete BCD at the server and resending it to the client. Waiting time for the user is reduced and bandwidth requirements for server-client communication are lowered. This becomes significant, when the re-rendered component represents only a minor part of the complete BCD. For example, when only the telephone number of a customer is changed by a sales person, only the displayed phone number needs to be changed, whereas the general layout of the BCD remains unchanged.

The present invention further relates to a computer system and a computer program to perform steps a) to e) of the inventive method. The present invention also relates to a server that performs steps a) and b) of the inventive method and to a client that performs steps c) to e) of the inventive method as well as to the corresponding server-side and client-side computer programs.

The aspects of the invention will be realized and implemented by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of the inventive computer system for rendering browser compliant documents;
- FIG. 2: illustrates a simplified, exemplary computer display according to the present invention at two different time points;
- FIG. 3: illustrates details of the inventive computer system at two different time points;
- FIG. 4: illustrates a preferred implementation of client-server communication according to the present invention; and
- FIG. 5: illustrates details of the inventive method for rendering browser compliant documents.

### Detailed Description of the Invention

Wherever possible, the same reference numbers will be used throughout the drawings to refer to the same or like parts. For convenience of explanation a list of references is provided prior to the claims.

### Definitions of terms, as used hereinafter:

### client:

client computer in a computer system.

### server:

server computer in the computer system.

### browser-compliant document:

document (e.g. markup language document, such as HTML), that can be visualized by a browser running on the client computer.

### document object model:

According to the corresponding W3C definition, the Document Object Model (DOM) provides a mechanism to access and manipulate parsed HTML and XML content.

### inline frame (IFRAME):

An inline frame is an embedded frame within a document where data from external sources (e.g. an HTML document different file) can be displayed.

### rendering:

Creating or generating a browser-compliant document or component (e.g. HTML page or input field).

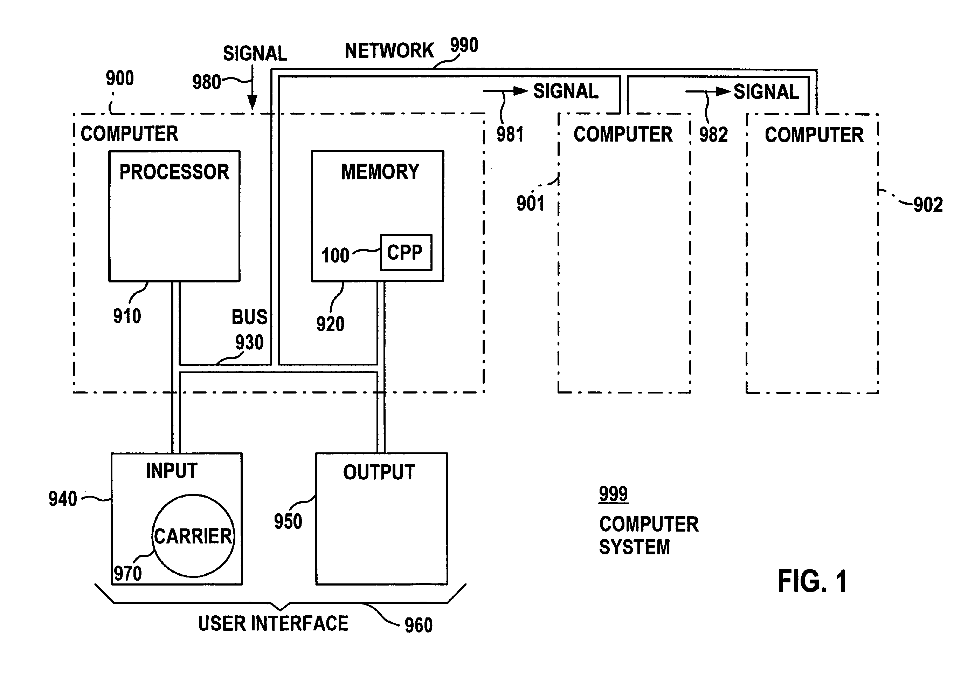

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

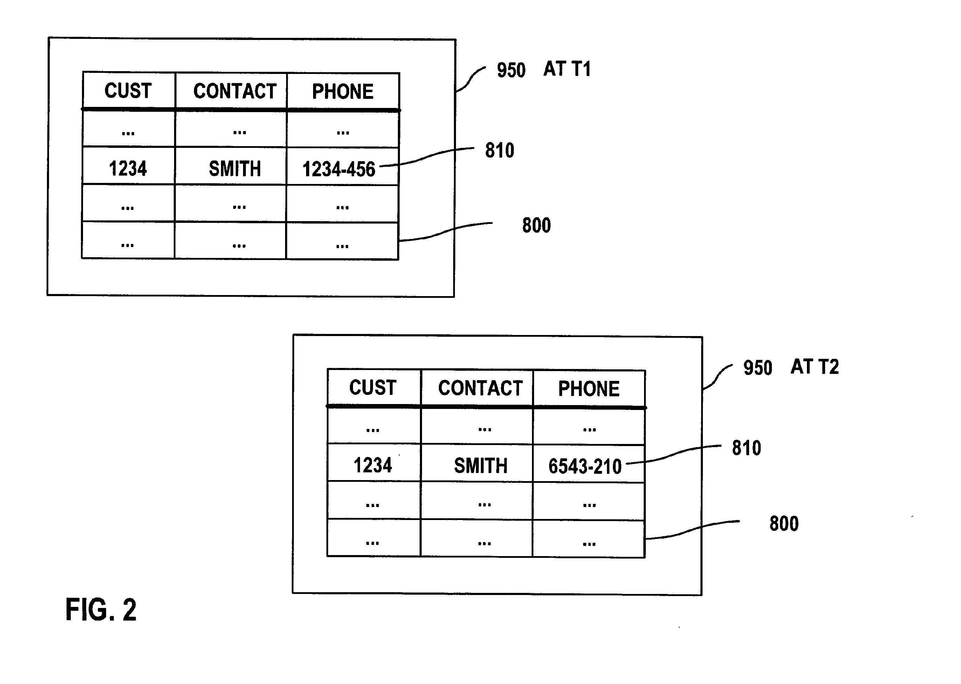

FIG. 2 illustrates a simplified, exemplary (computer) display 950 according to the present invention at two different time points T1, T2.

At T1, display 950 presents a document with table 800 to the user. Table 800 forms a graphical user interface for a specific software application. The first row of table 800 is a header row that indicates the meaning of each column. Each further row represents an application data set. In the example, table 800 has three columns (CUST, CONTACT, PHONE). Column CUST includes customer IDs of customers (e.g. 1234), column CONTACT includes the name of contact persons of the customers e.g. SMITH) and column PHONE includes the contact person's phone number (e.g. 1234-456). Cell 810 that includes phone number 1234-456 is a component of table 800. Before table 800 is presented to the user, server (computer) 901 (cf. FIG. 1) has generated (rendered) a corresponding document that was sent to client (computer) 900 and then displayed on display 950. Because rendering on server 901 typically is faster than rendering on client 900 (cf. FIG. 1), the user quickly gets prompted with table 800. A further advantage is that the user has the impression that all components (e.g. cell 810) of table 800 get displayed substantially simultaneously because all components are loaded by a browser. The browser then visualizes the components for the user substantially simultaneously.

AT T2, the user has interacted with client 900 in changing the phone number in cell 810 from 1234-456 to 6543-210. Instead of sending a request to server 901 to regenerate table 800 and resend it to client 900, client 900 regenerates the changed component (cell 810) and immediately displays the result to the user. This avoids time consuming server round trips, thus reducing waiting time for the user. Further, even if a server round trip is necessary in case that additional application data are requested from server 901, only the application data are sent from server 901 to client 900 without layout information saving bandwidth. A person skilled in the art further knows how to avoid screen flicker for the user by using, for example, a document's underlying document object model, when regenerating component 810 in table 800.

For convenience of explanation, the example will be used throughout the detailed description to explain details of the present invention. However, the example is not meant to be limiting the invention in any sense. A person skilled in the art can implement the invention to create any kind of user interface on an output device (e.g. computer display 950) that provides the advantages of the present invention.

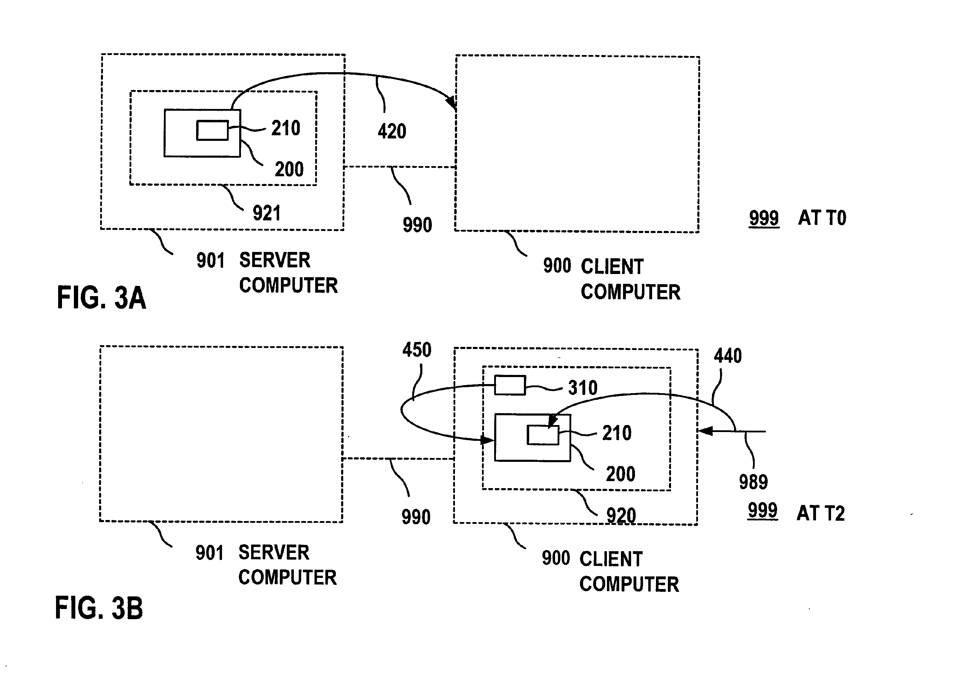

FIG. 3 illustrates details of the inventive computer system 999 at two different time points T0 (cf. FIG. 3A) and T2 (cf. FIG. 2B). T0 occurs before T1 (cf. FIG. 2). Hardware components are illustrated by dashed lines/frames. Software components are illustrated by solid lines/frames. Method steps are illustrated by curved arrows. Signals are illustrated by straight arrows.

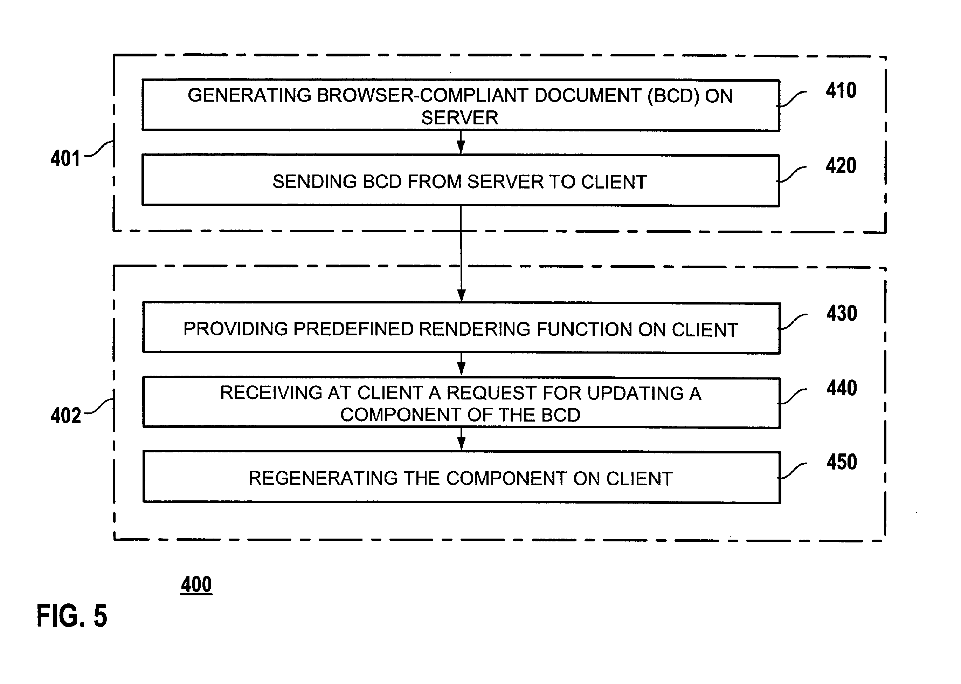

FIG. 3A shows computer system 999 at TO after having performed steps 410, 420 (cf. FIG. 5) of method 400 (cf. FIG. 5). Before T0, server 901 generates 410 (cf. FIG. 5) browser-compliant document 200 in server memory 921. Advantageously, BCD 200 is a markup language document (e.g. HTML, WML etc.). For example, a person skilled in the art can achieve that by applying an extensible style sheet transformation (XSLT) to an extensible markup language document (XML) resulting in an HTML document. A further example is to use Java Server Pages (JSP) to render a server-side HTML file via appropriate Java functions. BCD 200 includes at least component 210. Referring back to the example of FIG. 2, the document that shows table 800 corresponds to BCD 200 and cell 810 corresponds to component 210.

Then, server 901 sends 420 BCD 200 to client 900 via network 990. As used hereinafter, sending a document from server 901 to client 900 (or vice versa) means that actually a copy of the document is sent. For convenience of explanation the same reference numbers are used for the document on the server and the corresponding, identical copy on the client.

FIG. 3B shows computer system 999 at T2 after having performed steps 430, 440, 450 (cf. FIG. 5) of method 400. Before T2, client 900 provides 430 at least one predefined (rendering-)function 310 in client memory 920. Function 310 can be loaded from any storage medium within computer system 999 (cf. FIG. 1) or from any storage medium connected to computer system 999. For example, function 310 can be sent from memory 921 of server 901 to client 900 together with BCD 200 or separately. Advantageously, function 310 is a browser-compliant script function, such as a Java-Script function or a VisualBasic-Script function. Client 900 then receives 440 update request 989 for component 210. Referring back to the example of FIG. 2 receiving 440 update request 989 corresponds to receiving the changed phone number 6543-210 in cell 810 from the user. In this example, component 210 represents application data (phone number) that is visualized on display 950 via a conventional browser, such as the Microsoft Internet Explorer or Netscape Navigator, or any other browser, such as a browser on a mobile device (e.g. Palm Pilot, cell phone). Client 900 then uses function 310 to regenerate 450 component 210 so that the previous content (e.g. 1234-456) is replaced by the current content (e.g. 6543-210).

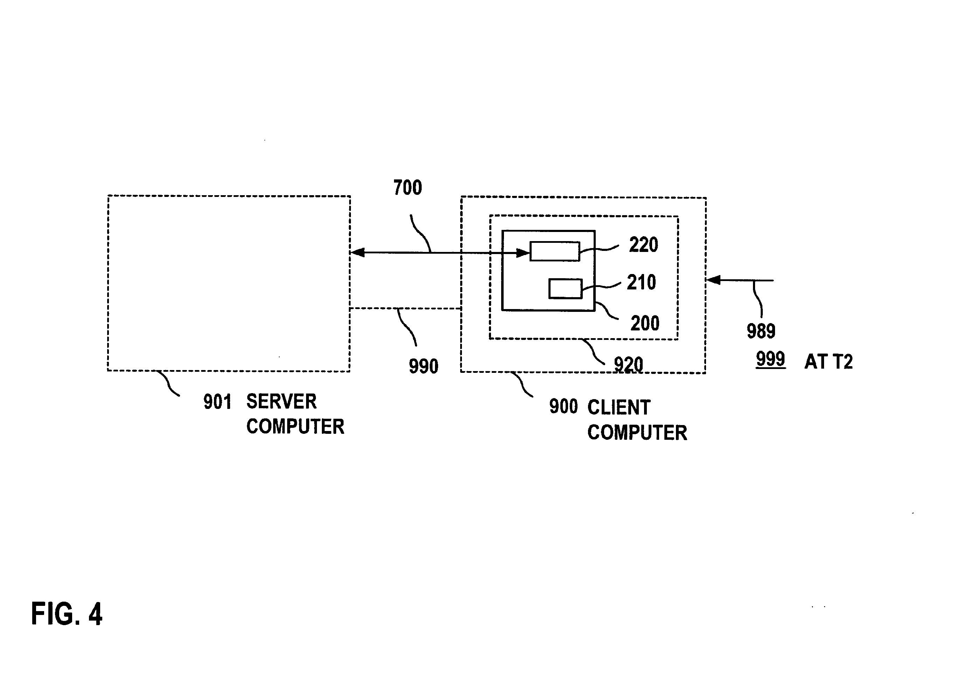

FIG. 4 illustrates a preferred implementation of client-server communication according to the present invention at time point T2 (cf. FIG 3B). Advantageously, BCD 200 includes further component 220. In case update request 989 requires communication 700 between client 900 and server 901, any data that is exchanged between server 901 and client 900 via network 990 is channelled through further component 220.

For example, in case BCD 200 is an HTML document, further component 220 can be an inline frame or any other component that is able of temporarily storing data and submitting this data. Thus, further component 220 is used to submit data from component 210 to server 901 and to submit data from server 901 to component 210. Preferably, further component 220 is not shown on display 950 (cf. FIG. 2).

Referring back to the example of FIG. 2, client 900 may send the changed phone number 6543-210 in cell 810 (component 210) to server 901 for updating a corresponding data set in an application database. Data being sent to server 901 is temporarily stored in further component 220. Server 901 may send a message to client 900 to confirm the update or to notify the user of a possible error. When the message is received by client 900 it is intermediately stored in further component 220 before being further processed by client 900 according to the present invention.
FIG. 5 illustrates details of the inventive method 400 for rendering browser compliant documents. Method 400 for rendering a browser-compliant document includes method 401 (dashed frame) corresponding to server related method steps 410, 420 and further includes method 402 (dashed frame) corresponding to client related method steps 430, 440, 450.
Method 400 includes the steps:
- generating 410 BCD on server;
- sending 420 BCD from server to client;
- providing 430 predefined rendering-function on client;
- receiving 440 at client a request for updating a component of BCD; and
- regenerating 450 component on client.

The steps are now further explained.

In the generating step 410, server 901 generates BCD 200. BCD 200 includes at least one component 210.

In the sending step 420, server 901 sends BCD 200 to client 900.

In the providing step 430, client 900 provides at least one predefined rendering-function 310.

In the receiving step 440, client 900 receives update request 989 for updating component 210.

In the regenerating step 450, client 900 regenerates component 210 according to update request 989 by using rendering-function 310.

Advantageously, steps 410, 420 of method 400 are running on server 901 and can be summarized as server related method 401. Steps 430, 440, 450 are running on client 900 and can be summarized as complementary, client-related method 402.

Corresponding computer program products 101, 102 (cf. FIG. 1) include pluralities of instructions for causing at least one processor 911, 910 (cf. FIG. 1) of server/client 901, 900 to render BCD 200 by executing the method steps of methods 401, 402, respectively. Each computer program product is embodied by a data carrier 971, 970 (cf. FIG. 1) or carried by a signal 980, 981 (cf. FIG. 1).

| **Reference** | **Description** |
|---|---|
| 100/101 | computer program product |
| 200 | browser-compliant document |
| 210, 220 | components |
| 310 | rendering-function |
| 400, 401, 402 | Method |
| 410-450 | Method steps |
| 700 | client-server communication |
| 900, 901, 902 | Computers |
| 910, 911, 912 | Processors |
| 920, 921, 922 | Memories |
| 930, 930-1, 930-2 | Bus |
| 940 | Input device |
| 950 | Output device |
| 951 | Cursor |
| 960 | User interface |
| 970 | Program carrier (computer readable device) |
| 980 | Program signal |
| 989 | update request |
| 990 | network |
| 999 | Computer system |
| Reference numbers | |

## Claims

1. A computer-implemented method (400) for rendering a browser-compliant document (200), the method (400) comprising the following steps:
generating (410) on a server computer (901) the browser-compliant document (200) that comprises at least one component (210);
sending (420) the browser-compliant document (200) from the server computer (901) to a client computer (900);
providing (430) at least one predefined rendering-function (310) on the client computer (900);
receiving (440) at the client computer (900) an update request (989) for the component (210); and
regenerating (450) the component (210) on the client computer (900) by using the rendering-function (310).

2. The method (400) of claim 1, wherein the browser-compliant document (200) is a markup language document.

3. The method (400) of claim 1, wherein the function (310) is a browser-compliant script function.

4. The method (400) of claim 1, wherein the component (210) represents application data that are visualized by a browser.

5. The method (400) of claim 1, wherein the browser-compliant document (200) comprises a further component (220) that is used for communication (700) between the client computer (900) and the server computer (901).

6. The method (400) of claim 5, wherein the further component (220) is an inline frame.

7. A computer-implemented method (401) for rendering a browser-compliant document (200), the method (401) comprising the following steps:
generating (410) on a server computer (901) the browser-compliant document (200) that comprises at least one component (210); and
sending (420) from the server computer (901) to a client computer (900) the browser-compliant document (200), wherein the client computer (900), upon receiving an update request (989) for the component (210), provides at least one predefined rendering-function (310) and regenerates the component (210) by using the rendering-function (310).

8. The method (401) of claim 7, wherein the browser-compliant document (200) comprises a further component (220) that is used for communication between the client computer (900) and the server computer (901).

9. The method (401) of claim 8, wherein the further component (220) is an inline frame.

10. A computer-implemented method (402) for rendering a browser-compliant document (200), the method (402) comprising the following steps:
upon receiving at a client computer (900) from a server computer (901) a browser-compliant document (200) that comprises at least one component (210), wherein the browser-compliant document (200) was generated on the server computer (901), providing (430) on the client computer (900) at least one predefined rendering-function (310);
receiving (440) at the client computer (900) an update request (989) for the component (210); and
regenerating (450) on the client computer (900) the component (210) using the rendering-function (310).

11. The method (402) of claim 10, wherein the browser-compliant document (200) comprises a further component (220) that is used for communication between the client computer (900) and the server computer (901).

12. The method (402) of claim 11, wherein the further component (220) is an inline frame.

13. A computer program product (100) embodied by a data carrier (970) or carried by a signal (980); the computer program product (100) having a plurality of instructions for causing at least one processor (910) of a client computer (900) to render a browser-compliant document (200) causing the client computer (900) to execute the following steps:
upon receiving at the client computer (900) from a server computer (901) a browser-compliant document (200) that comprises at least one component (210), wherein the browser-compliant document (200) was generated on the server computer (901), providing (430) on the client computer (900) at least one predefined rendering-function (310);
receiving (440) at the client computer (900) an update request (989) for the component (210); and
regenerating (450) on the client computer (900) the component (210) using the rendering-function (310).

14. The computer program product (100) of claim 13, wherein the browser-compliant document (200) comprises a further component (220) that is used for communication between the client computer (900) and the server computer (901).

15. The computer program product (100) of claim 14, wherein the further component (220) is an inline frame.

16. A computer program product (101) embodied by a data carrier (971) or carried by a signal (981); the computer program product (101) having a plurality of instructions for causing at least one processor (911) of a server computer (901) to render a browser-compliant document (200) causing the server computer (901) to execute the following steps:
generating (410) on the server computer (901) the browser-compliant document (200) that comprises at least one component (210); and
sending (420) from the server computer (901) to a client computer (900) the browser-compliant document (200), wherein the client computer (900), upon receiving (440) an update request (989) for the component (210), provides (430) at least one predefined rendering-function (310) and regenerates (450) the component (210) by using the rendering-function (310).

17. The computer program product (100) of claim 16, wherein the browser-compliant document (200) comprises a further component (220) that is used for communication between the client computer (900) and the server computer (901).

18. The computer program product (100) of claim 17, wherein the further component (220) is an inline frame.

19. A computer system (999) for rendering a browser-compliant document (200), the computer system (999) comprising:
a server computer (901) to generate (410) the browser-compliant document (200) comprising at least one component (210) and to send (420) the browser-compliant document (200) from the server computer (901) to a client computer (900); and
the client computer (900) to receive the browser-compliant document (200) from the server computer (901) and to provide (430) at least one predefined rendering-function (310), wherein the rendering-function (310) is used to regenerate (450) the component (210) upon having received (440) an update request (989) for the component (210).

20. A computer system (999) for rendering a browser-compliant document (200), the computer system (999) comprising the following means:
a means for generating (410) on a server computer (901) the browser-compliant document (200) that comprises at least one component (210);
a means for sending (420) from the server computer (901) to a client computer (900) the browser-compliant document (200);
a means for providing (430) on the client computer (900) at least one predefined rendering-function (310) ;
a means for receiving (440) at the client computer (900) an update request (989) for the component (210); and
a means for regenerating (450) on the client computer (900) the component (210) using the rendering-function (310).

21. A client computer (900) in a computer system (999) for rendering a browser-compliant document (200), the client computer (900) running a computer program to perform the following steps:
upon receiving at the client computer (900) from a server computer (901) a browser-compliant document (200) that comprises at least one component (210), wherein the browser-compliant document (200) was generated on the server computer (901), providing (430) on the client computer (900) at least one predefined rendering-function (310);
receiving (440) at the client computer (900) an update request (989) for the component (210); and
regenerating (450) on the client computer (900) the component (210) using the rendering-function (310).

22. A server computer (901) in a computer system (999) for rendering a browser-compliant document (200), the server computer (901) running a computer program to perform the following steps:
generating (410) on the server computer (901) the browser-compliant document (200) that comprises at least one component (210); and
sending (420) from the server computer (901) to a client computer (900) the browser-compliant document (200), wherein the client computer (900), upon receiving (440) an update request (989) for the component (210), provides (430) at least one predefined rendering-function (310) and regenerates (450) the component (210) by using the rendering-function (310).
